# EUROPEAN PATENT APPLICATION

(11) **EP 4 838 765 A1**
(43) Date of publication of application: **11.11.2026**
(21) Application number: 25174455.3
(22) Date of filing: 06.05.2025
(51) Int. Cl.: H02K 33/02, H02K 33/16, F04B 35/04, H02K 1/34

(54) **LINEAR ACTUATOR, COMPRESSOR, PUMP, AND HOUSEHOLD APPLIANCE**

(71) Applicant: BSH Hausgeräte GmbH, 81739 München (DE)
(72) Inventor: Ondrejcak, Jan, 04001 Kosice (SK); Findorak, Ondrej, 04013 Kosice (SK); Vapnár, Jozef, 07101 Michalovce (SK); Stavrovsky, Vladimir, 07101 Michalovce (SK)

(57) **Abstract**

Disclosed is a linear actuator 1 comprising a stator, a mover and at least two opposite mechanical resonance elements, which are adapted to generate, in consequence of an electric power input, a linearly reciprocating movement of the mover relative to the stator, wherein the mechanical resonance elements are wave springs and adapted to generate a counter force to the movement of the mover initiated by the electric power input.

Further disclosed are a pump and a compressor, respectively, comprising such linear actuator 1, and a household appliance comprising such pump and/or such compressor.

## Description

The present invention concerns a linear actuator, a compressor comprising such linear actuator, a pump comprising such linear actuator, and a household appliance including such compressor and/or pump.

Linear actuators are machine components which produce a usually reciprocating linear motion from energy, in particular from electrical input supplied thereto. In particular, they may be included in compressors and/or pumps as those integrated in household appliances, for example.

From US 2020/0260628 A1, a linear compressor is known which comprises a piston configured to linearly reciprocate in a cylinder so as to compress a refrigerant. For driving the motion, the compressor comprises an inner and an outer stator arranged with an interspace in-between, and a permanent magnet connected to the piston and positioned in the interspace. Mutual electromagnetic force between the permanent magnet, the inner stator, and the outer stator causes a linear motion of the permanent magnet and, therewith, of the piston connected thereto.

US 2020/0395836 A1 discloses a compressor having a linear motor comprising an outer stator, an inner stator, and a mover which is located between the outer and the inner stator and coupled to a piston. The outer stator includes a plurality of laminated blocks, on which a coil is wound. Two permanent magnets are coupled to the inner stator.

Mechanical springs are dominantly responsible for the proper and stable axial translational movement of the piston. Nowadays, classical uniform helical springs are used. In order to ensure the axial translational movement of the piston, a plurality of helical springs, at least two opposite helical springs, acts on the mover. Helical springs have torsional and radial stiffness comparable to its axial stiffness. This results in amplification of radial and torsional force reactions and other then just axial translational movement of the piston assembly consequently. Depending on the mass of piston assembly and torsional and radial stiffness of the helical springs the non-intended resonances (torsional or radial) can appear very close to an intended axial resonance frequency of the system.

It is an object of the present invention to provide an improved linear actuator, an improved compressor, an improved pump, and an improved household appliance.

The object is achieved by a linear actuator according to claim 1, by a compressor according to claim 5, by a pump according to claim 6, and by a household appliance according to claim 8. Advantageous embodiments are disclosed in the dependent claims, the description, and the drawings.

A linear actuator according to the present invention comprises a stator, a mover and at least two opposite mechanical resonance elements which are adapted to put (bring) the mover into a resonance state. The stator comprises at least one coil and the mover has at least one magnetic ring. The stator, the mover and the mechanical resonance elements are adapted to generate, in consequence of an electric power input, a linearly reciprocating movement of the mover relative to the stator. According to the invention, the mechanical resonance elements are wave springs.

In the resonant state, the mover can make big displacements with only small electric power excitation. In addition, the resonance elements are adapted to generate a counter force to the movement of the mover initiated by the electric power input. In an electric power-free situation, the wave springs hold the mover in its initial position.

By replacing the helical springs with the wave springs, only one intended axial resonance frequency appears. In other word, the use of wave springs in resonant linear reciprocal motor significantly decreases radial and torsional force reactions between sliding bodies (moving piston assembly and cylinder), while maintaining very low overall mechanical damping of the mass spring system. This leads to a better performance of the motor compared to basic design using helical springs. Minimizing the radial and torsional force reactions and movements also decrease wear out of moving mechanical parts, which positively influence reliability and the lifetime of the motor.

Preferably, the wave springs are in axial alignment with the mover and clamped between housing faces and opposite end faces of the mover. By means of this, a reliably construction is realised and the counter force is applied to the mover symmetrically, avoiding an axial misalignment of the mover.

In order to facilitate the production of the wave springs, they can be metallic. Alternatively, the wave springs are plastic-based. In particular, the wave springs can be composite parts having a resin matrix with embedded reinforce fibres such carbon fibres.

By executing the wave springs as equal parts, the assembly can be facilitated. Alternatively, the wave springs have different technical specification such as spring constants (rate) and length.

A compressor according to the present invention comprises a linear actuator according to an embodiment of the present invention. Therein, the linear actuator is preferably configured to vary a volume of a compression chamber formed by the compressor.

A pump according to the present invention comprises a linear actuator according to an embodiment of the present invention.

A household appliance according to the present invention comprises a compressor and/or a pump respectively in accordance with an embodiment of the present invention. The household appliance in particular may be a major appliance such as a washing machine, a tumble drier, a dishwater, a refrigerator, or a freezer.

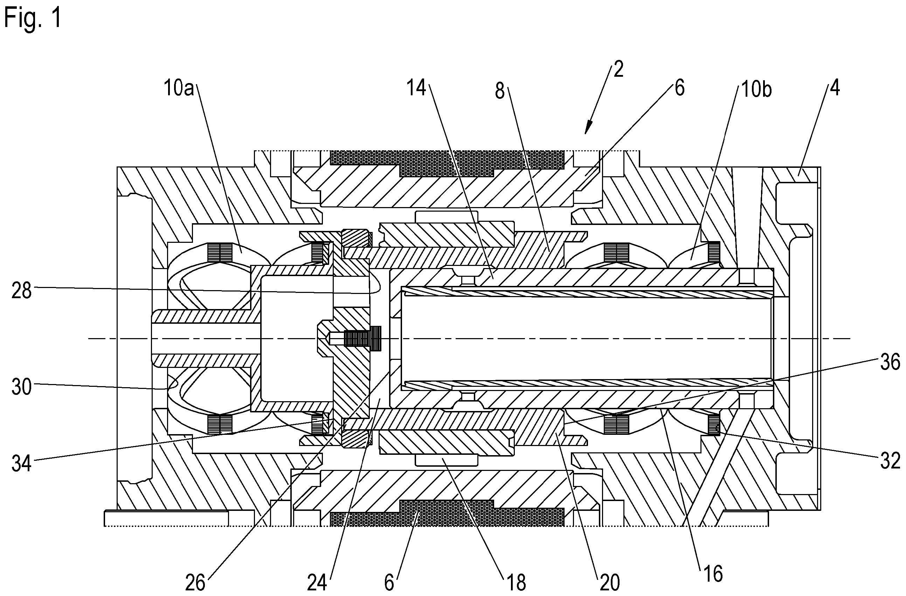

In what follows, a preferred embodiment of the present invention is explained with respect to the accompanying drawings. As to be understood, the various elements and components are depicted as examples only, may be facultative and/or combined in a manner different than that depicted. In single Figure 1, an exemplary embodiment of a compressor according to the present invention in a sectional view is shown. and

In Figure 1, a compressor 1 according to an embodiment of the present invention is partially shown. The compressor 1 comprises a linear actuator 2 according to an exemplary embodiment of the present invention and a housing 4.

The line actuator 2 comprises a stator 6, a mover 8 and at least two opposite mechanical resonance elements 10a, 10b. The stator 6, the mover 8 and the mechanical resonance elements 10a,10b are adapted to generate, in consequence of an electric power input, a linearly reciprocating movement of the mover 8 relative to the stator 6.

The stator 6 comprises an outer electric coil 12 which surrounds the mover 8.

The mover 8 is a cylinder which surrounds a stationary piston 14 and glides along the outer circumference surface 16 of the piston 14. The mover 8 has a magnetic ring 18 which interacts with the coil 12. In order to enhance the magnetic flux, a yoke 20 is provided between the mover 8 and the outer circumference surface 22 of the magnetic ring 18. In particular the magnetic ring 18 is a permeant magnet.

By the oscillating movement of the mover 8 relative to the stationary piston 14, a fluid such as a coolant is sucked into a chamber 24 between a front face 26 of piston 14 and a bottom 28 of the mover 8 through an inlet and released as compressed fluid through an outlet.

The mechanical resonance elements 10a,10b are wave springs and adapted to bring the mass of the mover 8 into a resonant state, where the mover 8 can make big displacement with only small electric power excitation. Additionally, the wave springs 10a, 10b are adapted to generate a counter force to the movement of the mover 8 initiated by the electric power input. In an electric power-free situation, the wave springs 10a, 10b hold the mover 8 in its illustrated initial position.

The wave springs 10a, 10b are in axial alignment with the mover 8 and clamped between internal housing faces 30, 32 and opposite end faces 34, 36 of the mover 8. Preferably, the wave springs 10a, 10b are made from metal or a metal alloy and have the same technical specification.

Disclosed is a linear actuator 1 comprising a stator, a mover and at least two opposite mechanical resonance elements, which are adapted to generate, in consequence of an electric power input, a linearly reciprocating movement of the mover relative to the stator, wherein the mechanical resonance elements are wave springs and adapted to generate a counter force to the movement of the mover initiated by the electric power input.

Further disclosed are a pump and a compressor, respectively, comprising such linear actuator 1, and a household appliance comprising such pump and/or such compressor.

### Reference signs

- 1: compressor
- 2: linear actuator
- 4: housing
- 6: stator
- 8: mover
- 10a, 10b: mechanical resonance element / wave spring
- 12: coil
- 14: piston
- 16: outer circumference surface of the piston
- 18: magnetic ring
- 20: yoke
- 22: outer circumference surface of the magnetic ring
- 24: chamber
- 26: front face of piston
- 28: bottom of the mover
- 30: internal housing face
- 32: internal housing face
- 34: end face of the mover
- 36: end face of the mover

- X: centre axis

## Claims

1. A linear actuator (2) comprising
- a stator (6) comprising at least one coil (12);
- a mover (8) having at least one magnet ring (18), and
- at least two opposite mechanical resonance elements (10a, 10b) adapted to bring
the mover into a resonance state, which are adapted to generate, in consequence of an electric power input, a linearly reciprocating movement of the mover (8) relative to the stator (6), wherein the mechanical resonance elements (10a, 10b) are wave springs.

2. The linear actuator according to claim 1, wherein the wave springs (10a, 10b) are in axial alignment with the mover (8) and clamped between housing faces (30, 32) and opposite end faces (34, 36) of the mover (8).

3. The linear actuator according to claims 1 or 2, wherein the wave springs (10a, 10b) are metallic.

4. The linear actuator according to claim 1, wherein the wave springs (10a, 10b) are equal parts.

5. Compressor (1) comprising a linear actuator (2) according to one of the preceding claims.

6. Pump comprising a linear actuator (2) according to any of the claims 1 to 4.

7. Household appliance comprising a compressor (1) according to claim 5 and/or a pump according to claim 5.

8. Household appliance according to claim 7 which is a washing machine, a tumble drier, a dishwater, a refrigerator, or a freezer.
